# EUROPEAN PATENT SPECIFICATION

(11) **EP 0 720 096 B1**
(45) Date of publication and mention of the grant of the patent: **15.06.2005**
(21) Application number: 96103428.7
(22) Date of filing: 04.09.1989
(51) Int. Cl.: G06F 11/14

(54) **Apparatus and method for providing continuity of operation in a system**
Vorrichtung und Verfahren zur Gewährleistung der Kontinuität des Betriebs in einem System
Appareil et méthode pour garantir la continuité des opérations dans un système

(30) Priority: 06.09.1988 JP 22274388
(43) Date of publication of application: 03.07.1996
(62) Divisional of application: 89308923.5
(73) Proprietor: SEIKO EPSON CORPORATION, Shinjuku-ku Tokyo (JP)
(72) Inventor: Hanaoka, Masaaki, c/o Seiko Epson Corporation, Suwa-shi, Nagano-ken (JP)
(74) Representative: Sturt, Clifford Mark

(56) References cited:
- EP-A- 0 230 351
- GB-A- 1 545 169
- JP-A- 63 039 053
- US-A- 3 959 778

## Description

The present invention relates to apparatus and a method for providing continuity of operation in a system.

Continuity of personal computers is desirable such that when a power supply for the personal computer is turned off and then is subsequently turned on again, the system is restored to the state established immediately before the power supply was previously turned off for permitting processing being executed at the time when the power supply was turned off to continue.

The advent of small sized, battery driven computers has resulted in portable computers which can be used irrespective of place and time, for example, while waiting for trains or aeroplanes, in free time before the start of meetings, etc. However, it is often difficult to complete all the procedures for the required processing in such a limited period of time. On these occasions, such computers would become more convenient to use, if the suspended processing could be continued later in any free moment, even after the power supply had been turned off and then on again.

Meanwhile, if the battery voltage drops too low (LOW BATTERY) during periods of use or because a power switch is inadvertently left on by the user, processing needs to be suspended under such non-chargeable conditions and then resumed later after re-charging. In the worst case, all of the data may be lost in the course of processing due to cut off of the power supply. It is desirable, therefore, for the power supply to be turned off after the current state is saved and for the suspended processing to be continued following clearing of the LOW BATTERY condition.

As will be seen from the above, the continuity of a computer is one of the crucial factors in improving the convenience of portable computers, in particular.

Realisation of continuity absolutely requires the system state at the point when the power supply is turned off to be held. That is, the contents of a main memory, the setting condition of I/O ports, the state of a CPU, etc. must be held. The setting condition (status) of the I/O ports specifies in turn the condition of hardware at the time when the power supply is turned off. The condition of the hardware can be stored as information in the main memory, and so the retention of data in the main memory will be considered herein.

With the conventional continuity techniques, the retention of data in the main memory has basically been realised by back-up of the power supply for the main memory. Specifically, power is supplied continuously to the main memory, comprising an SRAM, even after turn off of the power supply in order to retain the contents of the SRAM. Alternatively, if the main memory comprises a DRAM, a periodic refresh is effected even after turn off of the power supply.

However, such continuity techniques give rise to the following problems:-
(1) The system cost is increased as a result of the complexity of the circuit configuration and the specialised design of the devices employed.
. (2) Data cannot be preserved in the long term using only battery cells.

Thus, the resulting system is expensive and does not satisfactorily accomplish continuity.

EP 0230351A discloses an information processing system, which saves the state of the system in a special save area either at power down or when actuated by an operator through an On/Off switch. This special save area is provided with power during the suspended time in order to retain the state of the system at the time it was powered down.

The present invention seeks to solve the problems mentioned above, and to provide a continuity method which is inexpensive and reliable, as well as a more universal continuity system.

According to one aspect of the present invention, there is provided an apparatus as defined in claim 2.

As described in detail below, the apparatus can achieve not only continuity relative to the state established when a power supply was last turned off but also continuity by restoring the system to the state it was in at a yet earlier time.

Thus, the present invention allows the system to operate in a continuous manner by recording the system state, at the time of turning off the power supply or at a time instructed by the user, into the non-volatile memory means and then restoring the recorded earlier state upon turning on the power supply or upon an instruction from the user.

Thus, the processing occurring immediately before turn off of the power supply may be executed continuously.

According to another aspect of the present invention, there is provided a method as defined in claim 15.

The present invention will be described further, by way of example, with reference to the accompanying drawings, in which:-
Figure 1 is a block diagram illustrating the basic structure of a computer according to the present invention;
Figure 2 is a block diagram illustrating a first example of save process start detecting means of the computer;
Figure 3 is a block diagram illustrating a second example of save process start detecting means of the computer;
Figure 4 is a block diagram illustrating a third example of save process start detecting means of the computer;
Figure 5 is a block diagram illustrating a fourth embodiment of save process start detecting means of the computer;
Figure 6 is a diagram for explaining the operation of a save start command detection processing program shown in Figure 5;
Figure 7 is a block diagram illustrating a first example of a system state saving means of the computer;
Figure 8 is a block diagram illustrating a second embodiment of system state saving means of the computer;
Figure 9 is a block diagram illustrating a third example of system state saving means of the computer;
Figure 10 is a block diagram illustrating a first embodiment of post save processing means of the computer;
Figure 11 is a block diagram illustrating a second embodiment of post save processing means of the computer;
Figure 12 is a block diagram illustrating a first embodiment of restore process starting means of the computer;
Figure 13 is a block diagram illustrating a second embodiment of restore process starting means of the computer;
Figure 14 is a block diagram illustrating a first example of system state restoring means of the computer;
Figure 15 is a block diagram illustrating a second embodiment of system state restoring means of the computer;
Figure 16 is a block diagram illustrating a third example of system state restoring means of the computer;
Figure 17 is a block diagram illustrating a first embodiment of post restoration processing means of the computer;
Figure 18 is a block diagram illustrating a second embodiment of post restoration processing means of the computer;
Figure 19 is a block diagram illustrating in greater detail one illustrative example of computer according not forming part of the present invention; and
Figure 20 is a block diagram illustrating in greater detail another illustrative example of computer not forming part of the present invention.

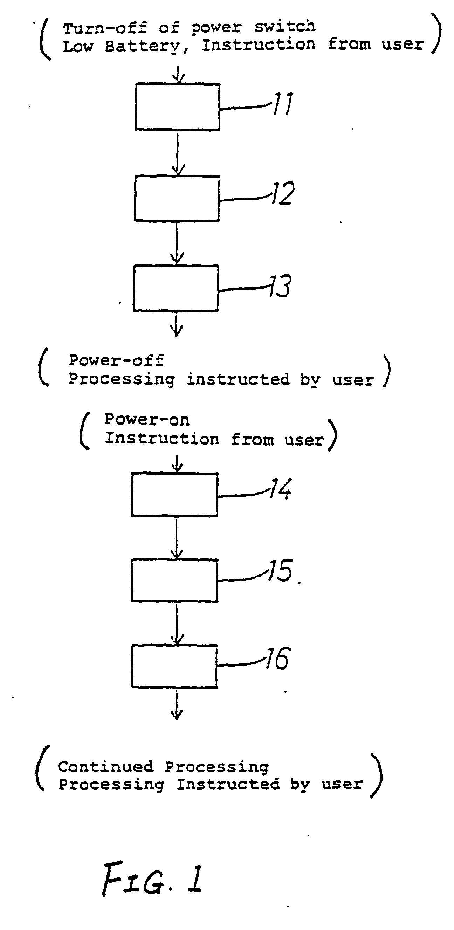

Referring initially to Figure 1, a computer according to the present invention comprises generally save process start detecting means 11, which manage and determine the timing at which the system state is to be saved. The save process is triggered by one of the following: turning off a power switch, the occurrence of a LOW BATTERY condition, or an instruction from the user, etc.

When a decision to save is made by the save process start detecting means 11, system state saving means 12 are arranged to supply data relating to the system state to an external store that will not lose the data even if the system power is cut off.

Post save processing means 13 then perform any processing required after the system state has been saved, for example, turning off the power supply, continued processing, initialisation, etc. Usually, the post save processing means 13 initiate turn off of the power supply.

Subsequently, restore process starting means 14 are activated, after raising the system or upon an instruction from the user, in order to activate system state restoring means 15.

The system state restoring means 15 read out the data relating to the earlier system state stored in the external store and sets such data in the system for restoring the previous state.

Post restoration processing means 16 finally restart the previously interrupted process in the restored system state. As an alternative, however, it is possible for a user to interrupt the process altogether.

Since each of the means employed in the present invention can be implemented in various ways, preferred embodiments of these means will be described first, following which typical configurations for the overall computer will be described by way of example.

A first example of the save process start detecting means 11, which does not form part of the present invention is shown in Figure 2, and comprises a power switch 21, a power switch state detector 22, an interruption controller 23, and a power off detection processing program 24.

When the power switch 21 is turned off by the user, the power switch state detector 22 detects the . turn off of the power switch 21 and issues to the interruption controller 23 a signal for requesting an interruption in accordance with the cut off of the power. Upon receiving that signal, the interruption controller 23 causes an interruption indicating cut off of the power. The power off detection processing program 24 is responsive to the interruption to detect turn off of the power switch 21 in software terms and carries out the necessary process steps to activate the system state saving means 12 (described later).

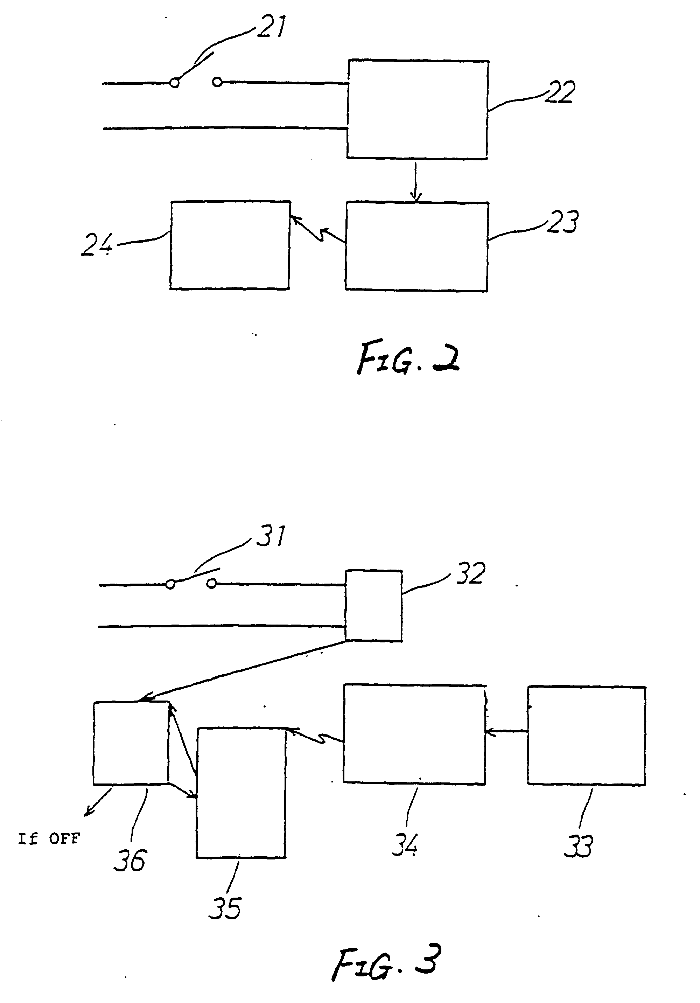

A second example of the save process start detecting means 11,which does not form part of the present invention shown in Figure 3 comprises a power switch 31, a switch state port 32, a system timer 33, an interruption controller 34, a timer routine 35, and a power off detection processing program 36.

When the power switch 31 is turned off by the user, the switch state port 32, which is connected to the power switch 31 and which is capable of reading the state of the power switch using a program, indicates turn off of the power switch 31. Further, the system timer 33 sends an interruption request signal to the interruption controller 34 at certain intervals, whereupon the interruption controller 34 causes a timer interruption. In response to the interruption request, the timer routine 35 is activated first to carry out the necessary processing such as up-dating of a counter and then to call the power off detection processing program 36. The power off detection processing program 36 reads the switch state port 32 and activates the system state saving means 12 (described later) if the power switch 31 is turned off, but returns the control back to the timer routine 35 to terminate the timer interruption if the power switch 31 is turned on.

While the first example of the save process start detecting means 11 is activated in response to the interruption caused upon cut off of the power, the second example of the save process start detecting means 11 detects cut off of the power only at certain intervals during the timer interruption.

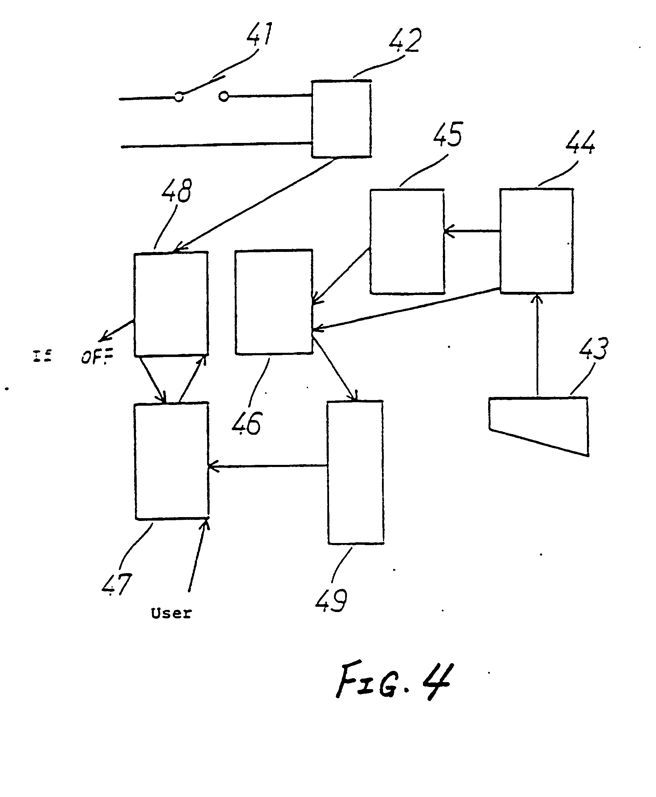

A third example of the save process start detecting means 11, which does not form part of the present invention, will now be described with reference to Figure 4. This example comprises a power switch 41, a switch state port 42, a keyboard 43, a keyboard data receiving unit 44, an interruption controller 45, a keyboard interruption routine 46, a keyboard data reading routine 47, a power off detection processing program 48, and a keyboard data buffer 49.

In this example, when the power switch 41 is turned off by the user, the switch state port 42, connected to the power switch 41 and capable of reading the on/off state of the power switch using a program, indicates turn off of the power switch 41. Further, when any key on the keyboard 43 is depressed, the keyboard data receiving unit 44 receives data from the keyboard 43 indicating that that key is depressed and sends a keyboard data receiving interruption request signal to the interruption controller 45. The interruption controller 45 causes a keyboard input interruption to activate the keyboard interruption routine 46, so that the keyboard data is read out of the keyboard data receiving unit 44 and loaded into the keyboard data buffer 49. The keyboard data loaded into the keyboard data buffer 49 is read out by the keyboard data reading routine 47 upon a request from a user program. The keyboard data reading routine 47 reads out the keyboard data and supplies it to the user program when keyboard data is present in the keyboard data buffer 49, but informs the user program of the absence of a key input, or waits until there is a key input and the keyboard data is entered into the keyboard data buffer 49, if the keyboard data buffer 49 is vacant. The decision whether to return the null state or wait for entry of the keyboard data is determined by the function of the keyboard data reading routine 47 or by the instruction from the user program. After reading the keyboard data, or immediately before indicating to the user program that the keyboard data buffer 49 is vacant, or during the wait for the next keyboard data to be loaded into the keyboard data buffer 49, the keyboard data reading routine 47 calls the power off detection processing program 48, which reads the power switch state port 42 and which then activates system state saving means 12 (described later) if the power switch 41 is turned off.

While the second example of the save process start detecting means 11 detects cut off of the power in association with the timer interruption, the third example of the save process start detecting means 11 features the detection of cut off of the power in association with the keyboard data reading program called by the user program most frequently.

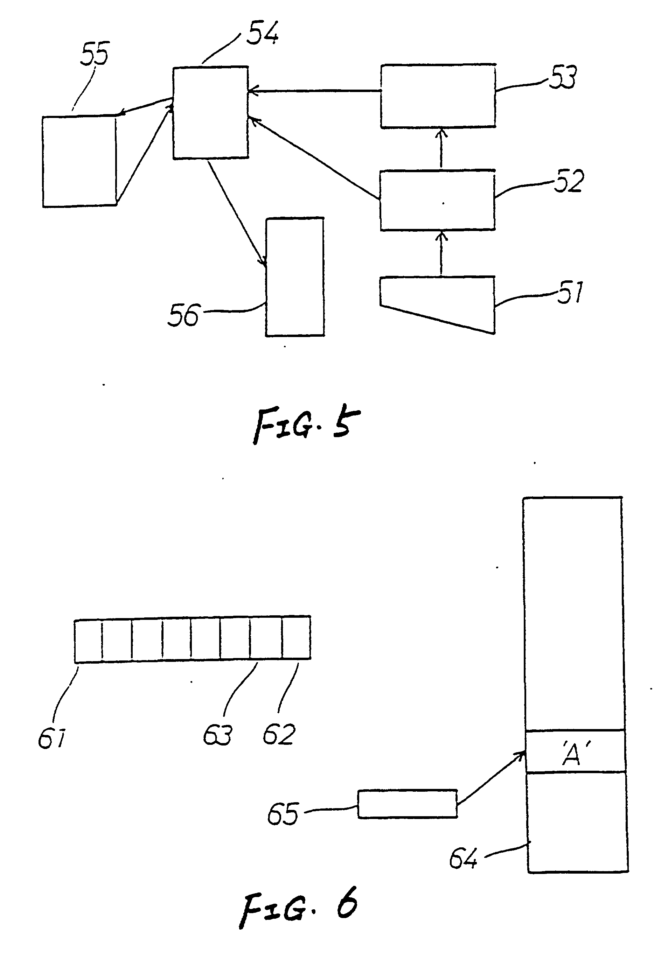

A fourth embodiment of the save process start detecting means 11, which forms part of the present invention and is shown in Figure 5, comprises a keyboard 51, a keyboard data receiving unit 52, an interruption controller 53, a keyboard interruption routine 54, a save start command detection processing program 55, and a keyboard data buffer 56.

In this embodiment, when any key on the keyboard 51 is depressed, the keyboard data indicating that that key is depressed is transmitted by the keyboard 51 to the keyboard data receiving unit 52, which in turn sends a keyboard data receiving interruption request signal to the interruption controller 53. The interruption controller 53 activates the keyboard inter- , ruption routine 54, so that the keyboard data is read out of the keyboard data receiving'unit 52 and loaded into the keyboard data buffer 56, following which the keyboard interruption routine calls the save start command detection processing program 55. The save start command detection processing program 55 monitors the contents of the keyboard buffer or other data concerning the keyboard, for example concerning keyboard status, and calls the system state saving means 12 (described later) when a specified state arises.

The save start command detection processing program 55 detects the specified state in the following manner: with reference to Figure 6, a keyboard status byte 61 includes a first bit 62 serving as a shift key status bit, and a second bit 63 serving as a control key status bit.

When during the keyboard interruption routine 54, a character such as "A", for example, is depressed on the keyboard and received as input data, the received character data is loaded into a keyboard buffer 64 and, as the final input character, its location within the keyboard buffer 64 is indicated by a buffer top pointer 65. If the next received data indicates a shift key being depressed (turned on), this data is not loaded into the keyboard buffer 64, and the shift key status bit 62 as the first bit of the keyboard status byte 61 is set to 1. Upon receiving the data indicating that the shift key has been released, the shift key status bit 62 is set to 0. Thus, the shift key status bit 62 takes 1 while the shift key is being depressed, but 0 when it is released. Likewise, the state of a control key is indicated by the control key status bit 63. Assuming that the instruction provided from the user to start the save processing is indicated by the fact that "the shift key and the control key are depressed simultaneously and the character "A" is further depressed", the save start command detection processing program 55 checks firstly whether the shift key status bit 62 and the control key status bit 63 are both set to 1 (turned on), and secondly whether the data within the keyboard buffer 64 pointed by the buffer top pointer 65 is "A". If the above three conditions are all satisfied, the system state saving means 12 (described later) is called.

As will be apparent from the above description, while the first to third examples of the save process start detecting means 11 detect turn off of the power switch, the fourth embodiment detects an instruction input by the user from the keyboard.

In a case where the first to third examples of the save process start detecting means 11 are modified by replacing the power switches 21, 31 and 41 with system voltage detection command switches, which detect electrically a decrease in voltage when the system voltage drops below a certain reference level and which operates similarly to the power switches 21, 31 and 41, the system state saving means 12 (described later) can still be activated in the same manner. The system voltage detection command switches in this instance may have a structure which takes into consideration characteristics of battery cells, the system state, time dependent variations in the decrease of the system voltage and other factors, such switches having the object of detecting a state when the charge capacity in the battery drive system has been lowered, before shut down of the system.

Referring now to the system state saving means 12, information relating to the system state, including the contents of a main memory, I/O status concerning the setting of I/O ports and hence the condition of devices in the system, the CPU state, etc., must be saved. The I/O status in terms of the setting manner and values of the I/O ports, and hence the condition of the devices, must be explicitly stated. In terms of information, however, the I/O status can be handled in a like manner to the information representing the state of the main memory and the CPU. Various means for outputting such information into an external store will now be described.

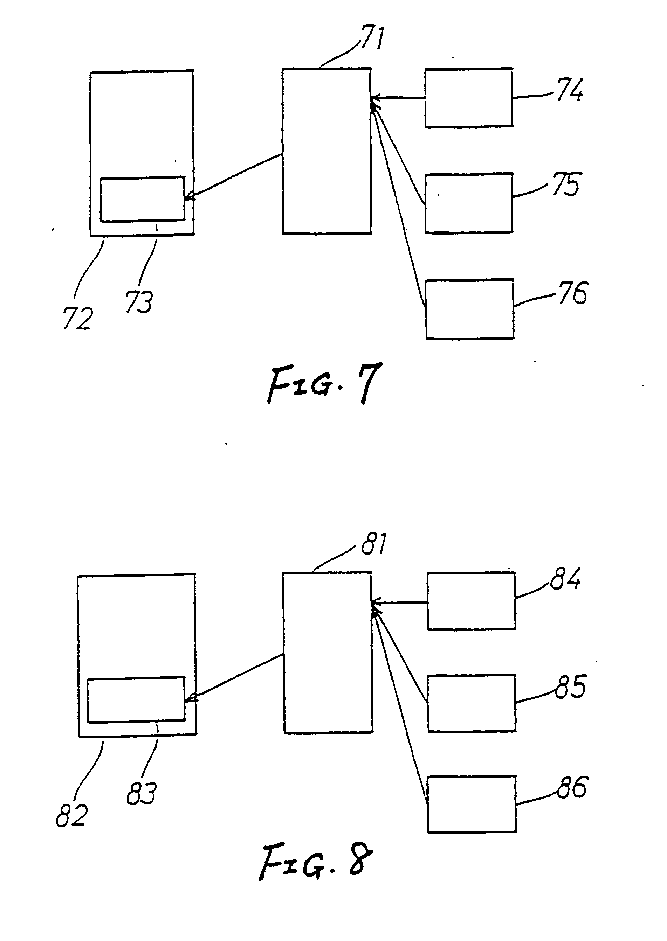

A first example of the system state saving means 12, which does not form part of the present invention, is shown in Figure 7 and comprises a system saving program 71, a hard disk drive 72 having a system state store region 73, a main memory 74, a CPU status store 75, and an I/O status store 76.

When the system saving program 71 is activated, the contents of the main memory 74, the CPU status store 75 and the I/O status store 76 are transferred into the system state store region 73 within the hard disk drive 72 as an external store. After completion of this outputting task, the control initiative is transferred to post save processing means 13 (described later).

The contents of the main memory 74 are basically only required to give information sufficient for realising system continuity. In general, the memory information that does not concern the continuity process itself needs to be saved in the state established prior to activation of the save process start detecting means 11.

The CPU status store 75 gives information with which the system state restoring means 15 (described later) can restore the CPU state, existing at the time of the last or yet earlier turn off of the power switch or at the time instructed by the user, when the power switch is next turned on or when the user next provides an instruction. Generally, the CPU status is stored in a stack of the main memory 74, and hence is saved at the same time as the contents of the main memory 74. The information in a special register etc. within the CPU is saved separately.

The I/O status store 76 gives information about I/O ports and the devices in the computer, which information is capable of setting the I/O ports and the devices and then restoring the I/O ports and the devices, to their state at the point immediately before activation of the aforesaid save process start detecting means 11, when the power switch is next turned on or when the system state is restored upon an instruction from the user. Those parts among the I/O information which remain unchanged irrespective of turn on/off of the power switch are not required to be saved.

The system state store region 73 within the hard disk drive 72 has capacity reserved at the time of logical formatting, which is sufficient only to store the additional information necessary for completely saving the contents of the main memory 74, the CPU status store 75 and the I/O status store 76 under control. Hence, the region 73 is separate from the region for storing DOS as well as the programs and data utilised under DOS. Thus, the system state store region 73 is fixedly maintaining within the hard disk drive 72 for being read by system state restoring means 15 (described later) for restoring the system state.

A second embodiment of the system state saving means 12, which forms part of the present invention and is shown in Figure 8, comprises a system saving program 81, a hard disk drive 82, a system state store file 83 residing in the hard disk drive 82, a main memory 84, a CPU status store 85, and an I/O status store 86.

In the embodiment shown in Figure 8, when the system saving program 81 is activated, the contents of the main memory 84, the CPU status store 85 and the I/O status store 86 are transferred, in the form of one file, to the hard disk drive 82 as an external store. This file is the system state store file 83. While the main memory 84, the CPU status store 85 and the I/O status store 86 are the same as those described in connection with the first embodiment of the system state saving means 12, the present embodiment of the system state saving means features the system state store file 83 instead of the aforesaid system state store region 73 to store the relevant information.

Storing the system state in the form of a file can increase the number of states logically stored. This makes it possible to restore the system not only to the state existing at the time when the power switch was last turned off or at the time instructed by the user, but also to a state existing at the time of a yet earlier turn off of the power switch or at any time instructed by the user. Handling in the form of a file also readily permits the deletion or correction of the information stored. In the case of restoring the system to the state existing at a point earlier than the last turn off of the power switch, however, it is required for the system state restoring means 15 (described later) to execute the processing without leaving any contradictions, because of the probability of changes in the contents of the external store.

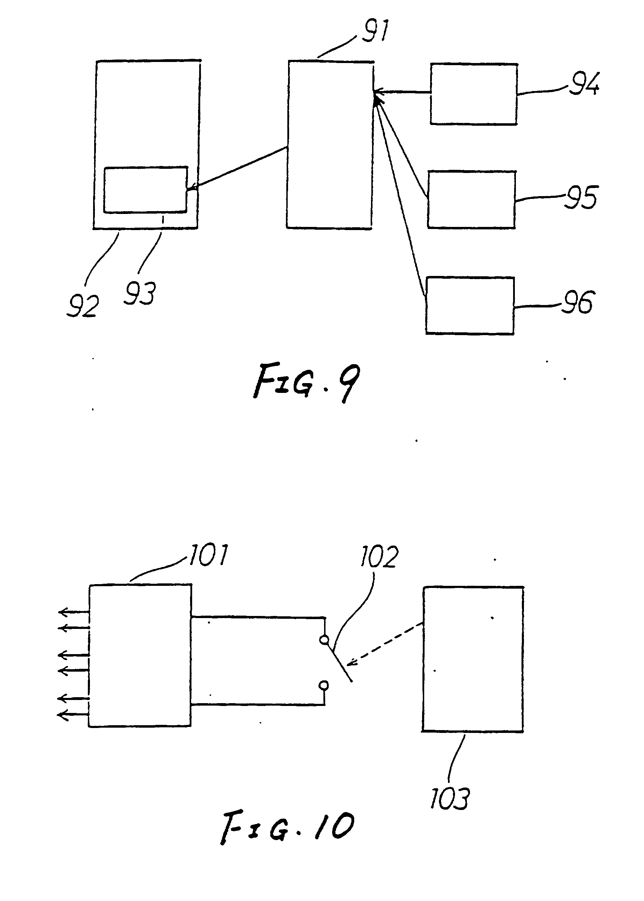

A third example of the system state saving means 12, which does not form part of the present invention, will now be described with reference to Figure 9. This embodiment comprises a system saving program 91, a floppy diskette 92, a system state store region 93 as a specific area in the floppy diskette 92, a main memory 94, a CPU status store 95, and an I/O status store 96.

In this example, the hard disk drive 72 in the first embodiment of the system state saving means 12 is replaced by the floppy diskette 92. Information such as the contents of the main memory 94, the CPU status store 95 and the I/O status store 96 is saved in a like manner as in the aforesaid first example.

While the hard disk drive 72 is fixed to the computer body, the floppy diskette 92 is not fixed to the computer body and can be replaced as a recording medium. According to this example, although the system state store region 93 is fixed in one floppy diskette, multiple system states can be recorded and retained using a plurality of floppy diskettes. In this respect, similar considerations as in the second embodiment of the system state saving means apply.

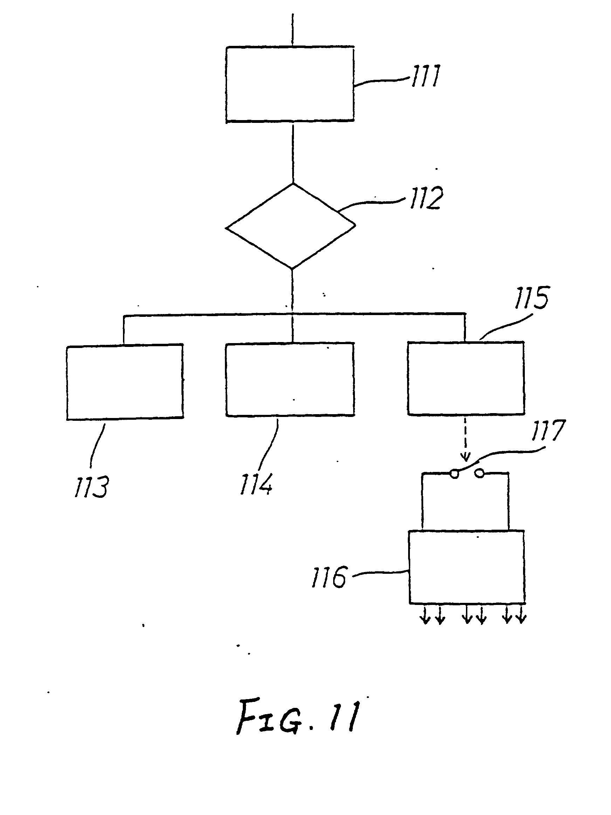

Respective embodiments of the post save processing means 13 will now be described with reference to Figures 10 and 11.

The embodiment shown in Figure 10 comprises a power supply unit 101, an electric power switch 102 and a power off program 103. The power supply unit 101 supplies power to the system. The electrical power switch 102 is connected to the power supply unit 101 and is capable of disconnecting the power supply unit 101 using software. When the power off program 103 initiates turning off of the electric power switch 102, the power supply unit 101 is disconnected and the supply of power to the system is cut off. Thus, this embodiment of the means 13 permits the power supplied to the system to be cut off by means of software.

The embodiment of the post save processing means 13 shown in Figure 11 comprises a processing select program 111, a processing determination program 112, a continuation program 113, a system initialisation program 114, a power off program 115, a power supply unit 116, and an electric power switch 117.

This embodiment represents post save processing means which enable the type of processing to be selected upon an instruction from the user after saving the system state into the external store. In this embodiment, three choices as to the type of processing to be selected are provided. The processing select program 111 gives the user a display of the types of processing, which may be executed after saving of the system state, and prompts the user to select any one of the choices for instructing which type of processing is to be executed. If the instruction from the user is appropriate, the processing determination program 112 executes the processing program selected. In this embodiment, the following three choices of types of processing are offered:
(1) continue the same processing after saving;
(2) initialise the system and raise it from the beginning; and
(3) cut off the power.

Depending on which of the three choices is selected, the continuation program 113, the system initialisation program 114 and the power off program 115 are executed, respectively.

The continuation program 113 allows the same processing as was being executed before activation of the save process start detecting means 11 to be continued. In this case, it is necessary to eliminate the event which caused the save process start detecting means 11 to be activated, or to prevent the save process start detecting means 11 from being operated again immediately.

The system initialisation program 114 initialises the system. In practice, the control initiative is advanced to an initialisation routine prepared beforehand.

. The power off program 115 cuts off the power for the system in a like manner to the aforesaid post save processing means 13.

The restore process starting means 14 serves to activate the system state restoring means 15 (described later) upon turning on the power for the system or upon an instruction from the user.

A first embodiment of the restore process starting means 14 shown in Figure 12 comprises a power on processing program 121, a boot strap loader 122, and a process start determination program 123.

When the system power is turned on, the power on processing program 121 starts operating to perform a basic check of the system, confirm and fixedly define the configuration, as well as initialise the I/O ports and the devices, such as RAMS, making up the system. Messages or the like are delivered, as required, to report the system state. The boot strap loader 122 is activated to load an operating system. After loading, the control initiative is usually transferred to the loaded operating system or to the loader contained therein for raising the operating system. In the present instance, however, the control initiative is advanced to the process start determination program 123 to confirm whether the processing can be continued, the process start determination program 123 checking whether the system state has been saved by the system state saving means 12. If so, the system state restoring means 15 (described later) are activated after receiving an instruction from the user for confirmation, or directly. The system state restoring means 15 (described later) can be activated either after waiting for confirmation by the user or without conditions. In the former case, the user determines whether to execute the processing continuously, whereas in the latter case the processing is continuous at all times.

Figure 12 shows a second embodiment of the restore process starting means 14. The second embodiment comprises a processing start program 131 which is provided as one of the commands for DOS and which runs the system state restoring means 15 (described later) if the system state has been saved by the system state saving means 12. If the system state has not been saved, the processing start program 131 issues a message or the like to inform the user that the system state cannot be restored.

The system state restoring means 15 will now be described, a first example of these means, which does not form part of the present invention, being shown in Figure 14. The first of the system state restoring means comprises a system restoring program 141, a hard disk drive 142 having a system state store region 143 as a specific area therein, a main memory 144, a CPU status store 145, and an I/O status store 146.

This example of the system state restoring means 15 co-operates with the first example of the system state saving means 12 in tandem. When the system restoring program 141 is activated, the system restoring program reads the system state, which has been saved by the system state saving means 12, out of the system state store region 143 within the hard disk drive 142, thereby restoring the system state including the contents of the main memory 144, the CPU status store 145 and the I/O status store 146 to the preceding condition. The CPU status is completely restored to the original state in the final step of the post restoration processing means 16 (described later). Also, the I/O status is mostly restored by the means 15, but may be changed until the final step of the post restoration processing means 16 (described later), such changes being co-ordinated by the post restoration processing means 16 to restore the I/O status completely to the previous condition.

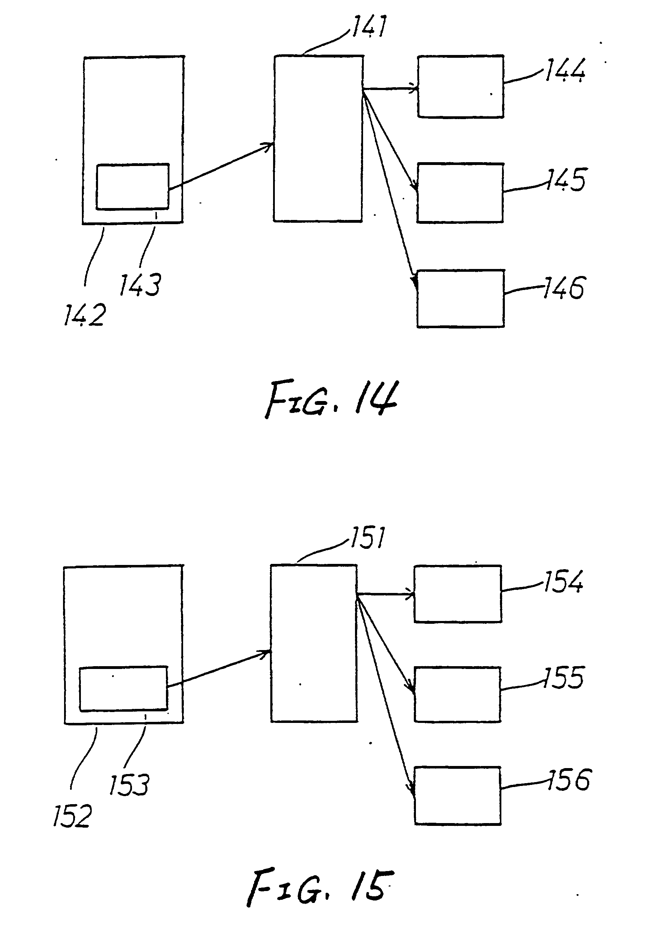

A second embodiment of the system state restoring means 15, which forms part of the present invention and is shown in Figure 15, comprises a system restoring program 151, a hard disk drive 152, a system state store file 153 constituting a file in the hard disk drive 152, a main memory 154, a CPU status store 155, and an I/O status store 156.

This embodiment of the system state restoring means co-operates with the second embodiment of the system state saving means 12 in tandem. When the system restoring program 151 is activated, the system restoring program 151 reads the system state, which has been saved by the system state saving means 12, out of the system state store file 153 within the hard disk drive 152, thereby restoring the system state including the contents of the main memory 154, the CPU status store 155 and the I/O status store 156 to the previous condition. The restoring method is the same as that which takes place in the aforesaid first example of the system state restoring means. As stated in connection with the second embodiment of the system state saving means 12, there are a plurality of system state store files in some cases. In such cases, it is necessary to adapt the system restoring program 151 either for restoring the system state that was saved the last time, or for displaying the list of files to the user to prompt selection of any one list

A third example of the system state restoring means 15, which does not form part of the present invention, is shown in Figure 16 and comprises a system restoring program 161, a floppy diskette 162, a system state store region 163 constituting a specific area in the floppy diskette 162, a main memory 164, a CPU status store 165 and an I/O status store 166.

This example of the system state restoring means co-operates with the third example of the system state saving means 12 in tandem. When the system restoring program 161 is activated, the system restoring program 161 reads the system state, which has been saved by the system state saving means 12, out of the system state store region 163 within the floppy diskette 162, thereby restoring the system state including the contents of the main memory 164, the CPU status store 165 and the I/O status store 166 to the previous condition. The restoring method is the same as that which takes place in the first example of the system state restoring means 15.

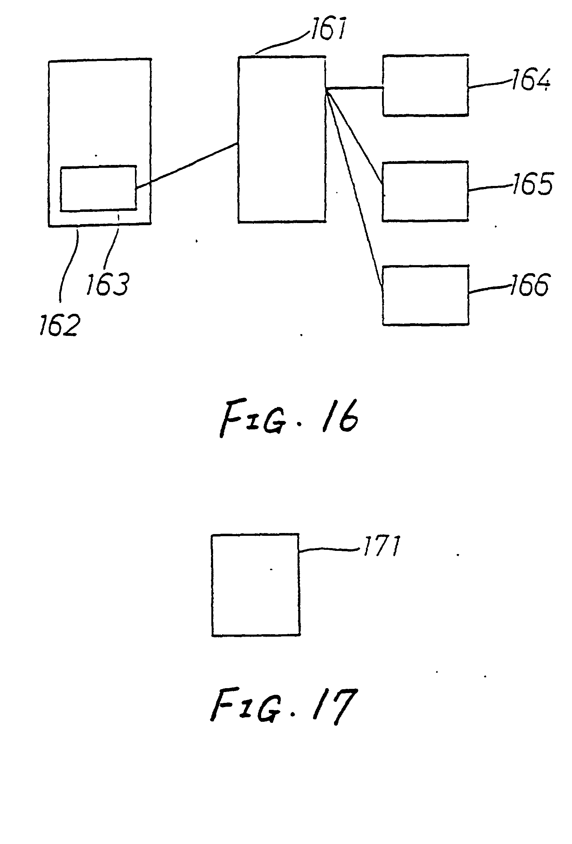

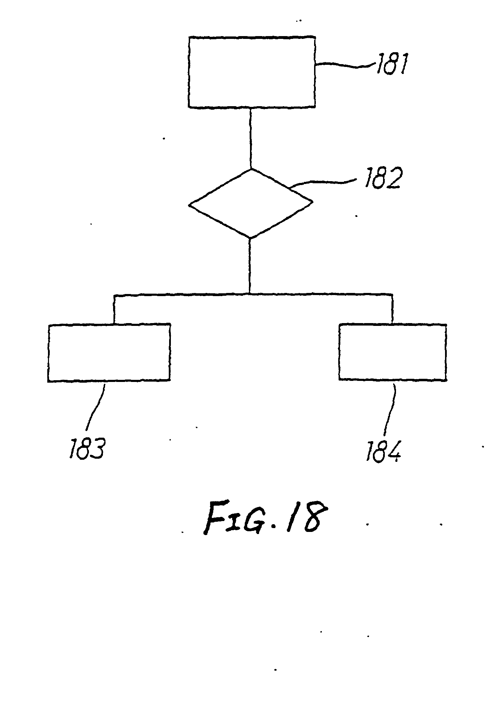

Two embodiments of the post restoration processing means 16 will now be described with reference to Figures 17 and 18.

The first embodiment shown in Figure 17 comprises a continuation processing program 171. After the system state has been restored to the previous condition by the system state restoring means 15, the system control is advanced to the continuation processing program 171. The continuation processing program 171 co-ordinates any changes in the system state restored by the aforesaid system state restoring means required to bring it into the final state allowing continuation processing, and then advances the system control to the point immediately following that at which the save process start detecting means 11 was operated. At this time, the system is already restored to the previous state, so the program which was previously being run is now finally run in a continued manner.

The second embodiment of the post restoration processing means shown in Figure 18 comprises a processing select program 181, a processing determination program 182, a continuation processing program 183, and a continuation break program 184.

This embodiment allows the user to instruct which type of processing is to be executed, after the restoration of the system state by the aforesaid system state restoring means 15. In this embodiment, there are provided two choices as to the type of processing to be selected. The processing select program 181 gives the user a display of the types of processing executable after restoration of the system state, and prompts the user to select one of the choices for instructing which type of processing is to be executed. If the instruction is appropriate, the processing determination program 182 executes the processing program selected. In this embodiment, the following types of processing are offered:
(1) restore the system to the previous state for realising continuation of the processing; and
(2) break continuation of the processing and then return to the command mode of DOS.

Depending on which of these two choices is selected, the continuation processing program 183 and the continuation break program 184 are executed, respectively.

The continuation processing program 183 is the same as the aforesaid continuation processing program 171 in the manner in which the continuation of the processing is realised. The continuation break program 184 returns the processing to the usual command mode of DOS. Accordingly, continuation of the processing is suspended.

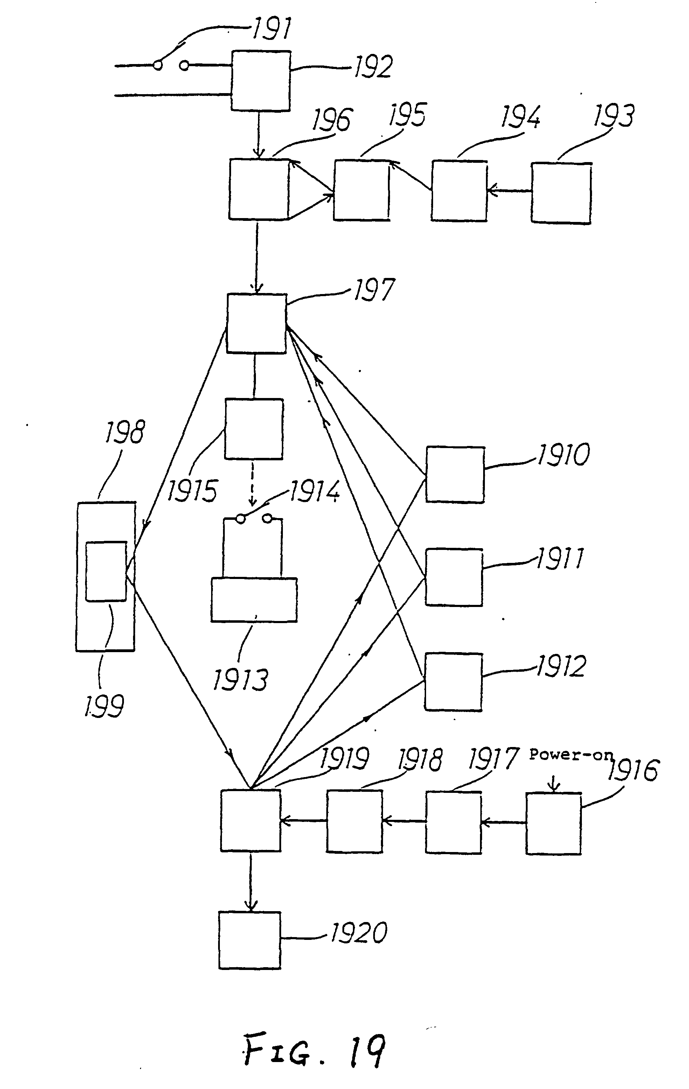

A typical computer incorporating the above individual means together will be explained below with reference to Figure 19.

The computer comprises a power switch 191, a switch state port 192, a system timer 193, an interruption controller 194, a timer routine 195, and a power off detection processing program 196. The computer further comprises a system saving program 197, a hard disk drive 198, having therein a system state store region 199, a main memory 1910, a CPU status store 1911, an I/O status store 1912, and power supply unit 1913 having an electric power switch 1914 capable of turning off the power supply unit 1913 by means of software. A power off program 1915 controls the switch 1914. A power on processing program 1916, a boot strap loader 1917, a processing start program 1918, a system restoring program 1919 and a continuation processing program 1920 are also provided.

The above configuration combines the following examples of each of the basic means:
(1) The save process start detecting means 11 shown in Figure 3;
(2) The system state saving means 12 shown in Figure
(3) The post save processing means 13 shown in Figure 10;
(4) The restore process starting means 14 shown in Figure 12;
(5) The system state restoring means 15 shown in Figure 14; and
(6) The post restoration processing means 16 shown in Figure 17.

Operation of this illustrative example of the computer will now be described.

. When the power switch 191 is turned off by the user, the switch state port 192, connected to the power switch 191 and capable of reading the state of the power switch using a program, indicates the turn off of the power switch 191. Further, the system timer 193 sends an interruption request signal to the interruption controller 194 at certain intervals, so that the interruption controller 194 causes a timer interruption. In response to the interruption request, the timer routine 195 is activated to carry out the necessary processing such as up-dating of a counter and then to call the power off detection processing program 196. The power off detection processing program 196 reads the switch state port 192, when it is allowed to detect the state of the power switch and continue the processing, and activates the system saving program 197 if the power switch 191 is turned off, returning the control back to the timer routine 195 to terminate the timer interruption processing if the power switch 191 is turned on.

The system saving program 197 supplies the contents of the main memory 1910, the CPU status store 1911 and the I/O status store 1912 into the system state store region 199 within the hard disk drive 198 as an external store. After completion of that task, the power off program 1915 is activated. The main memory 1910, the CPU status store 1911, the I/O status store 1912 etc. are as explained above in relation to the first example of the system state saving means 12.

The power supply unit 1913 supplies power to the system. The electrical power switch 1914 is connected to the power supply unit 1913 and is capable of disconnecting the power supply unit 1913 by means of software. When the power off program 1915 turns off the electric power switch 1914, the power supply unit 1913 is disconnected and the supply of power to the system is cut off.

Next, when the system power is turned on, the power on processing program 1916 starts operating to perform a basic check of the system, confirm and fixedly define the configuration, as well as initialise the I/O ports and the devices, such as RAMS, making up the system. The boot strap loader 197 is then activated to load an operating system (DOS). Subsequently, the process start determination program 1918 is activated to check whether the processing can be continued. If so, the control is advanced to the system restoring program 1919.

. The system restoring program 1919 reads the system state, which has been saved by the system saving programe 197, out of the system state store region 199 within the hard disk drive 198, thereby restoring the system including the contents of the main memory 1910, the CPU status store 1911, the I/O status store 1912, etc. to the state at the point when the power switch was last turned off. The various considerations in restoring the contents of the main memory 1910, the CPU status store 1911, the I/O status store 1912, etc. are as set forth in connection with the system state restoring means 15.

. In order for the system restoring program 1919 to restore the system state completely by returning the control to the point under the command executed when the power was last cut off, i.e. immediately after interruption of the timer routine 195, without any contradications, the final state is co-ordinated by the continuation processing program 1920.

In this way, continuation of the processing with continuous execution can be achieved whereas otherwise the processing would be suspended mid-way by the cut off of the power

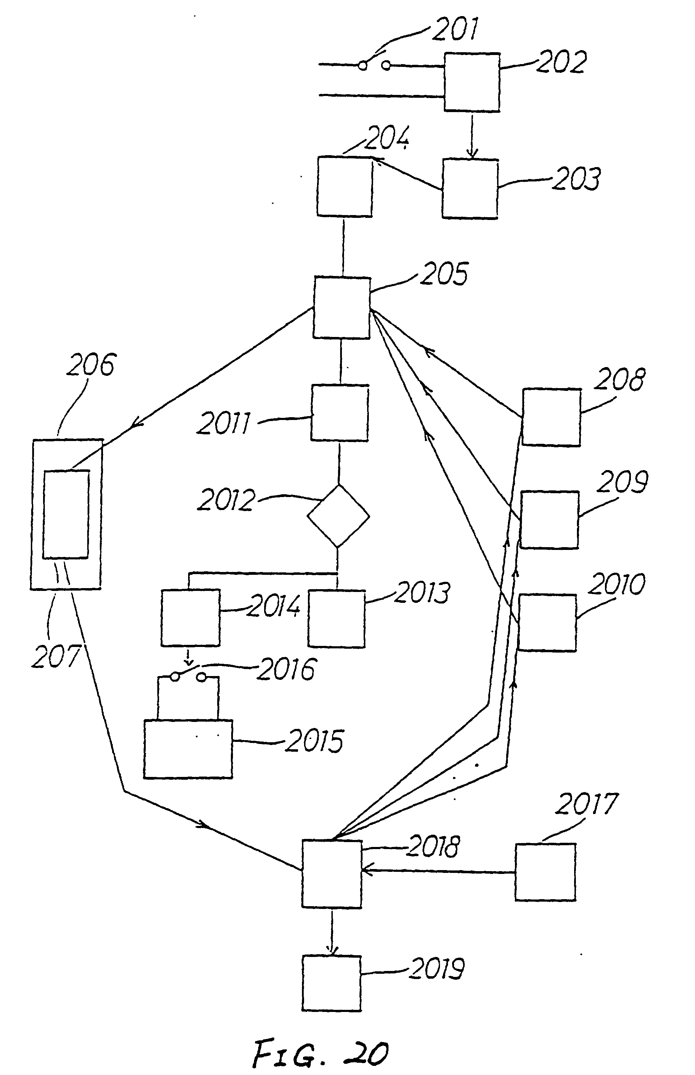

Another illustrative example of computer according to the present invention will be described with reference to Figure 20.

This example includes a power switch 201, a power switch state detector 202, an interruption controller 203, and a power off detection program 204. The present embodiment further includes a system state saving program 205, a hard disk drive 206 having a system state store file 207 as a specific area therein, a main memory 208, a CPU status store 209, an I/O status store 2010, a processing select program 2011, a processing determination program 2012, a system initialisation program 2013, a power off program 2014, a power supply unit 2015, and an electric power switch 2016 capable of turning off the power supply unit using software. A processing start program 2017, a system restoring program 2018, and a continuation processing program 2019 are also included.

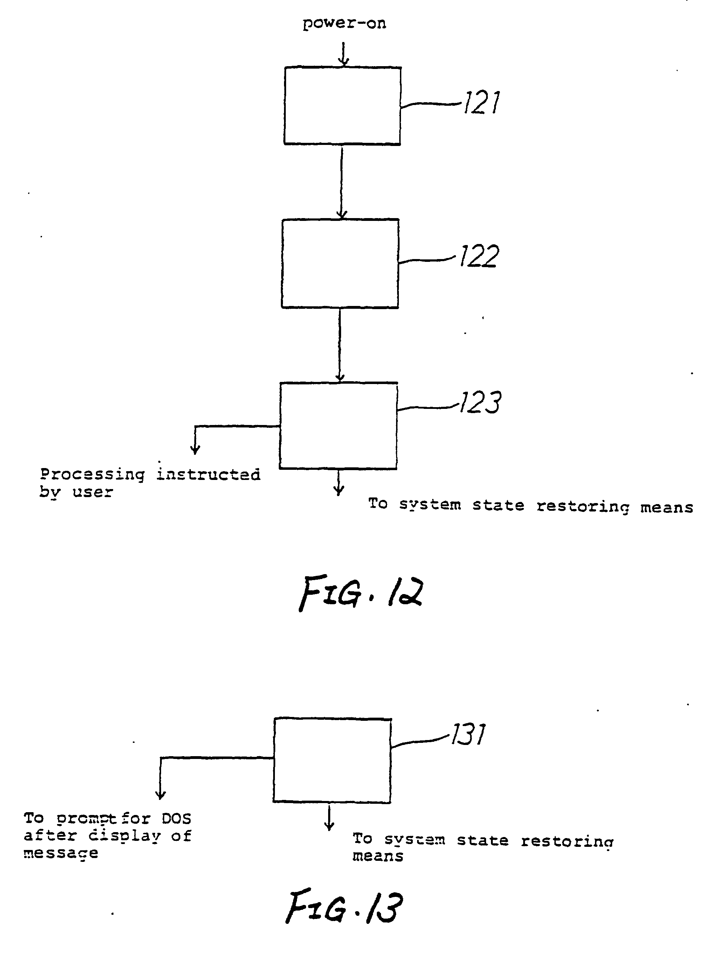

The above configuration combines the following examples and embodiments of each of the basic means:-
(1) The save process start detecting means 11 shown in Figure 2;
(2) The save start saving means 12 shown in Figure 8;
(3) The post save processing means 13 shown in Figure 11;
(4) The restore process starting means 14 shown in Figure 13;
(5) The system state restoring means 15 shown in Figure 15; and
(6) The post restoration processing means 16 shown in Figure 17.

Operation of this example will now be described.

When the power switch 201 is turned off, the power switch state detector 202 detects this and issues to the interruption controller 203 a signal for requesting an interruption in accordance with the cut off of the power. Upon receiving that signal, the interruption controller 203 causes an interruption indicating cut off of the power under. In response to the interruption, the power off detection program 204 and then the system saving program 205 are activated.

The system saving program 205 supplies the contents of the main memory 208, the CPU status store 209 and the I/O status store 2010, in the form of one file, to the hard disk drive 206 as an external store. This file is the system state store file 207. After completion of that task, the processing select program 2011 is activated. The main memory 208, the CPU status store 209 and the I/O status store 2010 are as explained in relation to the system state saving means 12. Also, the considerations in handling the file are as discussed with reference to the second embodiment of the system state saving means 12.

The processing select program 2011 gives the user a display of the choices in the type of processing which can be executed after saving of the system state, and then waits for an instruction from the user. In this embodiment, the following two choices of types of processing are provided:
(1) initialise the system and raise it from the beginning; and
(2) cut off the power.

Depending on which of the two choices is selected, the processing determination program 2012 activates the system initialisation program 2013 or the power off program 2014. The system initialisation program 2013 initialises the system. In practice, the control is advanced to the initialisation routine prepared beforehand. The power off program 2014 operates the electric power switch 2016 to disconnect the power supply unit 2015, so that the supply of power to the system is cut off, as with the foregoing embodiment.

Subsequently, when the system power is turned on to raise the system, the processing start program 2017 is activated with a command from.the operating system, which in turn activates the system restoring program 2018.

The system restoring program 2018 reads the system state, which has been saved by the system saving program 205, out of the system state store file 207 within the hard disk drive 206, thereby restoring the system state including the contents of the main memory 208, the CPU status store 209, the I/O status store 2010 etc. to its condition at the point where the power switch was last turned off. The considerations in restoring the contents of the main memory 208, the CPU status store 209, the I/O status store 2010 etc. are as set forth in connection with the second embodiment of the system state restoring means 15. Also, the considerations in the case when a plurality of system state store files are included are as explained in relation to the second embodiment of the system state restoring means 15.

In order for the system restoring program 2018 to restore the system state completely by returning the control to the point following the command executed immediately before the power was last cut off, i.e. immediately after interruption of the power off detection program 204, without any contradictions, the final state is co-ordinated by the continuation processing program 2019.

While various embodiments of the present invention have been described above, it will be understood taking into account the practical implementation of the respective means and combinations thereof that many other embodiments are possible in addition to the illustrated ones. For example, the external store is not limited to hard disk drives and floppy disk drives, and may include IC cards, compact disk drives, tapes, etc. The system state to be saved can be determined in dependence on the need for reducing the information stored.

In any event, however, the present invention can provide an inexpensive and reliable means of realising continuity for a computer, so that it is possible to fully take advantage of the portable nature of small sized, battery driven computers which are likely to become more commonly used in the future. The invention makes it possible to improve the performance and convenience of such computers.

## Claims

1. An apparatus for providing continuity of operation in a system which exhibits a system condition and which performs a process, the system including a CPU having a status, a main memory (84) for storing data and a power supply (101) for supplying power to said system, said apparatus for providing continuity comprising:
save process start detecting means (11) for detecting a demand to begin a save process and producing a demand signal in response thereto, wherein said save process start detecting means includes user instruction input means (51) to provide a user input, said user input indicating a demand to begin a save process and wherein said save process start detecting means produces said demand signal in response to said user input indicating a demand to begin a save process, whereby said demand to begin a save process can be initiated by a user,
non-volatile memory means (72), including at least one system state store file (83), for storing data representing a condition of said system;
system state saving means (12) coupled to said save process start detecting means for receiving said demand signal, and coupled to said CPU and said main memory for receiving a CPU status corresponding to the status of said CPU at the time of said demand and the data in said memory at the time of said demand, the CPU status and data representing a condition of said system at an occurrence of said demand, and being further coupled to said non-volatile memory means for storing said system condition in are said system state store file of said non-volatile memory means in response to said demand signal by storing the system condition data necessary to restore said system condition to enable said apparatus to perform said process and to continue said process at one of the same, next or prior step;
post-save processing means (13) coupled to said system state saving means for performing processing after said system state saving means has completely output said system condition to said non-volatile memory means;
restore process start means (14) coupled to said power supply for detecting when said power supply is turned on and outputting a detection signal in response thereto; and
system state restoring means (15) coupled to said restore process start means for receiving said detection signal, coupled to said non-volatile memory means for reading said system condition therefrom, and coupled to said CPU and main memory for restoring, in response to said detection signal, said CPU and main memory to the system condition last stored in said non-volatile memory means, whereby said process can be continued at one of the same, next or prior process step as the process step occurring when said demand was detected by said save process start detecting means.

2. The apparatus for providing continuity of operation as claimed in claim 1, wherein the system further includes a plurality of input/output ports and/or devices having a status; and said system state saving means is additionally coupled to said plurality of input/output ports and/or devices for further receiving an I/O status corresponding to the status of said plurality of input/output ports and/or devices at the time of said demand, said I/O status, in addition to the CPU status and data, representing a condition of said system at an occurrence of said demand.

3. The apparatus for providing continuity of operation as claimed in claim 1 or claim 2, further comprising:
process selecting means (181) operatively coupled to said restore process start means for displaying to a user a plurality of processes which may be executed, at least one of said displayed processes being continuing the operation of said process after the system condition has been restored.

4. The apparatus for providing continuity of operation as claimed in claim 1 or claim 2, further comprising:
process selecting means operatively coupled to said restore process start means for receiving said detection signal, said process selecting means displaying to a user, in response to said detection signal, a plurality of saved system conditions stored in said non-volatile memory means from which said system may be restored; and
process determination means for permitting selection of one of said plurality of displayed saved system conditions in accordance with an input from said user; and
wherein said system state restoring means is coupled to said process determination means for receiving said selection, coupled to said non-volatile memory means for reading said selected one of said plurality of saved system conditions therefrom, and coupled to said CPU and said main memory for restoring said CPU and said main memory to said selected system condition.

5. The apparatus for providing continuity of operation as claimed in claim I or claim 2, further comprising:
process selecting means operatively coupled to said restore process start means for receiving said detection signal, said process selecting means displaying to a user, in response to said detection signal, the one or more saved system conditions which may be restored from said non-volatile memory means; and
process determination means for permitting selection of one of said displayed saved conditions in accordance with an input from said user;
wherein said system state restoring means is coupled to said process determination means for receiving said selection, and coupled to said non-volatile memory means for reading one of said saved system conditions corresponding to said selection therefrom, and coupled to said CPU and said main memory for restoring said CPU and said main memory to said selected saved system condition stored in said non-volatile memory means.

6. The apparatus for providing continuity of operation as claimed in claim 1 or claim 2, further comprising:
process start determination means coupled to said restore process start means for receiving said detection signal, said process start determination means confirming, in response to said detection signal, whether processing can be continued from a system condition saved in said non-volatile memory means and outputting a confirmation if said processing can continue;
wherein said system state restoring means (15) is coupled to said process start determination means, coupled to said non-volatile memory means for reading said system condition therefrom, and coupled to said CPU and main memory for restoring said CPU and main memory to the system condition stored in said non-volatile memory means in response to said confirmation from said process start determination means that processing can be continued from a system condition saved in said non-volatile memory means; and further comprising
post-restore processing means (16) coupled to said system state restoring means for determining when the CPU and main memory are restored to the system condition which existed at the time of said demand to begin a save process, and
coupled to said CPU and main memory for controlling the operation of said process after the system state restoring means has restored said system condition, said post-restore processing means continuing said process at one of the same, next or prior process step as the process step occurring when said demand was detected by said save process start detecting means.

7. The apparatus for providing continuity of operation as claimed in any one of claims 1 to 5, wherein;
said system state restoring means is additionally coupled to said plurality of input/output ports and/or devices for additionally restoring, in response to said detection signal, said plurality of input/output ports and/or devices to the system condition stored in said non-volatile memory means, whereby said process can be continued at one of the same, next or prior process step as the process step occurring when said demand was detected by said save process start detecting means.

8. The apparatus for providing continuity of operation as claimed in claim 6, wherein;
said system state restoring means is additionally coupled to said plurality of input/output ports and/or devices for additionally restoring said plurality of input/output ports and/or devices to the system condition stored in said non-volatile memory means in response to said confirmation from said process start determination means that processing can be continued from a system condition saved in said non-volatile memory means; and
said post-restore processing means coupled to said system state restoring means for further determining when said plurality of input/output ports and/or devices are restored to the system condition which existed at the time of said demand to begin a save process, und additionally coupled to said plurality of input/output ports and/or devices for controlling the operation of said process after the system state restoring means has restored said system condition, said post-restore processing means continuing said process at one of the same, next or prior process step as the process step occurring when said demand was detected by said save process start detecting means.

9. The apparatus for providing continuity of operation according to any preceding claim, wherein said save process start detecting means further includes a switch (21) having an on state and an off state, and power off detection processing means (22) for reading the power switch state indicated by said switch and producing a demand signal when said power switch is in an off state.

10. The apparatus for providing continuity of operation according to any preceding claim, wherein said power supply includes a battery having a voltage, and said save process start detecting means includes a battery voltage detection processing means for detecting the voltage of the battery and producing a demand signal when said voltage falls below a predetermined value.

11. The apparatus for providing continuity of operation according to any preceding claim, wherein said post-save processing means is further coupled to said power supply and turns off said power supply after said system state saving means has completely stored said system condition to said non-volatile memory means.

12. The apparatus for providing continuity of operation according to any preceding claim, wherein said post-save processing means further includes process selecting means (111) operatively coupled to said system state saving means for displaying to a user a plurality of processes which may be executed after said system condition has been stored in said non-volatile memory means, and process determination means for permitting selection of one of said plurality of displayed processes in accordance with an input from said user, at least one of said processes being continuing with the current process.,

13. The apparatus for providing continuity of operation according to any preceding claim, wherein said non-volatile memory means includes an external storage means.

14. The apparatus for providing continuity of apparatus according to claim 14, wherein said external storage means includes a hard disk drive.

15. A method for providing continuity of operation in a system which exhibits a system condition and which performs a process, the system including a CPU having a status, a main memory (84) for storing data, a non-volatile memory (72) including at least one system state store file (83) for storing data representing a condition of said system and a power supply (101) for supplying power to said system, said CPU status and main memory data representing said system condition, said method comprising the steps of:
detecting a demand initiated by a user input to begin a save process for saving said system condition and providing a demand signal;
storing said system condition to are said system state store file of said non-volatile memory in response to said demand signal by storing the system condition data necessary to restore said system condition and to continue said process at one of the same, next or prior step;
performing processing after said system condition has been completely stored to said non-volatile memory;
detecting when said power supply is turned on and providing a detection signal; and
reading said system condition from said non-volatile memory and restoring said CPU and said memory to the system condition last stored in said non-volatile memory for continued processing based on said system condition stored at the time of the detection of when the power supply was turned on.

16. The method for providing continuity of operation according to claim 15, further comprising the steps of:
displaying to a user a plurality of processes which may be executed after said system condition has been stored to said non-volatile memory;
permitting selection of one of said plurality of displayed processes in accordance with an input from said user, at least one of said displayed processes being continuing the operation of said process after the system condition has been restored; and
reading said selected system condition from said non-volatile memory and restoring said CPU and said memory to the system condition stored in said non-volatile memory for continued processing based on said system condition stored at the time of the detection of when the power supply was turned on.

17. The method for providing continuity of operation according to claim 15, further comprising the steps of:
displaying to a user a plurality of saved system conditions in response to said detection signal which may be restored from said non-volatile memory;
permitting selection of one of said plurality of displayed saved system conditions in accordance with an input from said user; and
reading one of the plurality of displayed saved system conditions from said non-volatile memory in accordance with said user selection and restoring said CPU and said memory to the system condition selected by said user stored in said non-volatile memory.

18. A method for providing continuity of operation according to claim 15, further comprising:
displaying to a user a plurality of processes which may be executed after said system condition has been stored to said non-volatile memory; and
permitting selection of one of said plurality of displayed processes in accordance with an input from said user, at least one of said displayed processes being continuing with the current process.

19. The method for providing continuity of operation according to any one of claims 15 to 18, wherein the system further includes a plurality of input/output ports and/or devices having a status, and said status of said plurality of input/output ports and/or devices also represents said system condition.

20. The method for providing continuity of operation according to any one of claims 15 to 19, wherein said non-volatile memory includes an external storage means.

21. The method for providing continuity of operation according to claim 20, wherein said external storage includes a hard disk drive.

## Patentansprüche

1. Vorrichtung zur Gewährleistung der Kontinuität des Betriebs in einem System, die einen Systemzustand anzeigt und einen Prozess ausführt, wobei das System eine CPU mit einem Status, einen Hauptspeicher (84) zum Speichern von Daten und eine Stromversorgung (101) zum Zuleiten von Strom zu dem System umfasst, wobei die Vorrichtung zur Gewährleistung der Kontinuität umfasst:
ein Mittel (11) zum Erfassen des Starts eines Sicherungsprozesses, das einen Befehl, mit einem Sicherungsprozess zu beginnen, erfasst und ein Befehlssignal als Reaktion darauf erzeugt, wobei das Mittel zum Erfassen des Starts eines Sicherungsprozesses ein Mittel zur Eingabe einer Benutzeranweisung (51) enthält, um eine Benutzereingabe bereitzustellen, wobei die Benutzereingabe einen Befehl anzeigt, einen Sicherungsprozess zu beginnen, und wobei das Mittel zum Erfassen des Starts eines Sicherungsprozesses das Befehlssignal als Reaktion auf die Benutzereingabe erzeugt, die einen Befehl anzeigt, einen Sicherungsprozess zu beginnen, wodurch der Befehl, einen Sicherungsprozess zu beginnen, von einem Benutzer initiiert werden kann,
ein nichtflüchtiges Speichermittel (72), das mindestens eine Systemzustandsspeicherdatei (83) zum Speichern von Daten enthält, die einen Zustand des Systems darstellen,
ein Mittel (12) zur Sicherung des Systemzustands, das an das Mittel zum Erfassen des Starts eines Sicherungsprozesses gekoppelt ist, um das Befehlssignal zu empfangen, und an die CPU und den Hauptspeicher gekoppelt ist, um einen CPU-Status, der dem Status der CPU zum Zeitpunkt des Befehls entspricht, und die Daten in dem Speicher zum Zeitpunkt des Befehls zu empfangen, wobei der CPU-Status und die Daten einen Zustand des Systems beim Auftreten des Befehls darstellen, und das des Weiteren an das nichtflüchtige Speichermittel gekoppelt ist, zum Speichern des Systemzustands in einer Systemzustandsspeicherdatei des nichtflüchtigen Speichermittels als Reaktion auf das Befehlssignal durch Speichern der Systemzustandsdaten, die notwendig sind, um den Systemzustand wiederherzustellen, um der Vorrichtung zu ermöglichen, den Prozess auszuführen und den Prozess entweder in demselben, nächsten oder einem vorangehenden Schritt fortzusetzen;
ein Mittel (13) zur Verarbeitung nach der Sicherung, das an das Mittel zur Sicherung des Systemzustands gekoppelt ist, um eine Verarbeitung auszuführen, nachdem das Mittel zur Sicherung des Systemzustands den Systemzustand vollständig an das nichtflüchtige Speichermittel ausgegeben hat,
ein Mittel (14) zum Starten der Prozesswiederherstellung, das an die Stromversorgung gekoppelt ist um zu erfassen, wann die Stromversorgung eingeschaltet ist, und zum Ausgeben eines Detektionssignals als Reaktion darauf; und
ein Mittel (15) zum Wiederherstellen des Systemzustands, das an das Mittel zum Starten der Prozesswiederherstellung gekoppelt ist, um das Detektionssignal zu empfangen, das an das nichtflüchtige Speichermittel gekoppelt ist, um den Systemzustand aus diesem auszulesen, und an die CPU und den Hauptspeicher gekoppelt ist, um als Reaktion auf das Detektionssignal die CPU und den Hauptspeicher wieder in den Systemzustand zu bringen, der zuletzt in dem nichtflüchtigen Speichermittel gespeichert wurde, wodurch der Prozess entweder in demselben, nächsten oder einem vorangehenden Schritt wie dem Prozessschritt fortgesetzt werden kann, der erfolgte, als der Befehl von dem Mittel zum Erfassen des Prozessstarts erfasst wurde.

2. Vorrichtung zur Gewährleistung der Kontinuität des Betriebs nach Anspruch 1, wobei das System des Weiteren eine Vielzahl von Eingabe/Ausgabe-Ports und/oder -Vorrichtungen mit einem Status enthält; und das Mittel zur Sicherung des Systemzustands zusätzlich an die Vielzahl von Eingabe/Ausgabe-Ports und/oder -Vorrichtungen gekoppelt ist, um des Weiteren einen I/O-Status zu empfangen, der dem Status der Vielzahl von Eingabe/Ausgabe-Ports und/oder -Vorrichtungen zum Zeitpunkt des Befehls entspricht, wobei der I/O-Status zusätzlich zu dem CPU-Status und den Daten einen Systemzustand beim Auftreten des Befehls darstellt.

3. Vorrichtung zur Gewährleistung der Kontinuität des Betriebs nach Anspruch 1 oder Anspruch 2, umfassend:
ein Prozesswählmittel (181), das betriebsbereit an das Mittel zum Starten der Prozesswiederherstellung gekoppelt ist, um einem Benutzer eine Vielzahl von Prozessen anzuzeigen, die ausgeführt werden können, wobei mindestens einer der angezeigten Prozesse den Betrieb des Prozesses nach der Wiederherstellung des Systemzustands fortsetzt.

4. Vorrichtung zur Gewährleistung der Kontinuität des Betriebs nach Anspruch 1 oder Anspruch 2, des Weiteren umfassend:
ein Prozesswählmittel, das betriebsbereit an das Mittel zum Starten der Prozesswiederherstellung gekoppelt ist, um das Detektionssignal zu empfangen, wobei das Prozesswählmittel einem Benutzer als Reaktion auf das Detektionssignal eine Vielzahl von gesicherten Systemzuständen anzeigt, die in dem nichtflüchtigen Speicher gespeichert sind, aus welchen das System wiederhergestellt werden kann; und
ein Prozessbestimmungsmittel, das eine Wahl eines aus der Vielzahl von angezeigten gesicherten Systemzuständen in Übereinstimmung mit einer vom Benutzer getätigten Eingabe ermöglicht; und
wobei das Mittel zum Wiederherstellen des Systemzustands an das Prozessbestimmungsmittel gekoppelt ist, um die Wahl zu empfangen, an das nichtflüchtige Speichermittel gekoppelt ist, um den ausgewählten aus der Vielzahl von gesicherten Systemzuständen auszulesen, und an die CPU und den Hauptspeicher gekoppelt ist, um die CPU und den Hauptspeicher wieder in den ausgewählten Systemzustand zu bringen.

5. Vorrichtung zur Gewährleistung der Kontinuität des Betriebs nach Anspruch 1 oder Anspruch 2, des Weiteren umfassend:
ein Prozesswählmittel, das betriebsbereit an das Mittel zum Starten der Prozesswiederherstellung gekoppelt ist, um das Detektionssignal zu empfangen, wobei das Prozesswählmittel einem Benutzer als Reaktion auf das Detektionssignal den einen oder die mehreren gesicherten Systemzustände anzeigt, die aus dem nichtflüchtigen Speicher wiederhergestellt werden können; und
ein Prozessbestimmungsmittel, das eine Wahl eines der angezeigten gesicherten Systemzustände in Übereinstimmung mit einer vom Benutzer getätigten Eingabe ermöglicht;
wobei das Mittel zum Wiederherstellen des Systemzustands an das Prozessbestimmungsmittel gekoppelt ist, um die Wahl zu empfangen, und an das nichtflüchtige Speichermittel gekoppelt ist, um einen der gesicherten Systemzustände, der der Wahl entspricht, auszulesen, und an die CPU und den Hauptspeicher gekoppelt ist, um die CPU und den Hauptspeicher wieder in den ausgewählten gesicherten Systemzustand zu bringen, der in dem nichtflüchtigen Speicher gespeichert ist.

6. Vorrichtung zur Gewährleistung der Kontinuität des Betriebs nach Anspruch 1 oder Anspruch 2, des Weiteren umfassend:
ein Mittel zum Bestimmen des Prozessstarts, das an das Mittel zum Starten der Prozesswiederherstellung gekoppelt ist, um das Detektionssignal zu empfangen, wobei das Mittel zum Bestimmen des Prozessstarts als Reaktion auf das Detektionssignal bestätigt, ob die Verarbeitung von einem Systemzustand fortgesetzt werden kann, der in dem nichtflüchtigen Speichermittel gesichert ist, und eine Bestätigung ausgibt, wenn die Verarbeitung fortfahren kann;
wobei das Mittel (15) zum Wiederherstellen des Systemzustands an das Mittel zum Bestimmen des Prozessstarts gekoppelt ist, an das nichtflüchtige Speichermittel gekoppelt ist, um den Systemzustand auszulesen, und an die CPU und den Hauptspeicher gekoppelt ist, um die CPU und den Hauptspeicher als Reaktion auf die Bestätigung von dem Mittel zum Bestimmen des Prozessstarts, dass die Verarbeitung von einem Systemzustand fortgesetzt werden kann, der in dem nichtflüchtigen Speichermittel gespeichert ist, wieder in den Systemzustand zu bringen, der in dem nichtflüchtigen Speicher gespeichert ist; und wobei des Weiteren
ein Mittel (16) zur Verarbeitung nach der Widerherstellung an das Mittel zum Wiederherstellen des Systemzustands gekoppelt ist, um zu bestimmen, wann die CPU und der Hauptspeicher wieder in den Svstemzustand gebracht sind, der zum Zeitpunkt des Befehls, einen Sicherungsprozess zu beginnen, vorherrschte, und an die CPU und den Hauptspeicher gekoppelt ist, um den Betrieb des Prozesses zu steuern, sobald das Mittel zum Wiederherstellen des Systemzustands den Systemzustand wiederhergestellt hat, wobei das Mittel zur Verarbeitung nach der Widerherstellung den Prozess in demselben, nächsten oder vorangehenden Prozessschritt wie dem Prozessschritt fortsetzt, der erfolgte, als der Befehl von dem Mittel zum Erfassen des Prozessstarts erfasst wurde.

7. Vorrichtung zur Gewährleistung der Kontinuität des Betriebs nach einem der Ansprüche 1 bis 5, wobei:
das Mittel zum Wiederherstellen des Systemzustands zusätzlich an die Vielzahl von Eingabe/Ausgabe-Ports und/oder -Vorrichtungen gekoppelt ist, um zusätzlich als Reaktion auf das Detektionssignal die Vielzahl von Eingabe/Ausgabe-Ports und/oder -Vorrichtungen wieder in den Systemzustand zu bringen, der in dem nichtflüchtigen Speichermittel gespeichert ist, wodurch der Prozess in demselben, nächsten oder vorangehenden Prozessschritt wie dem Prozessschritt fortgesetzt werden kann, der erfolgte, als der Befehl von dem Mittel zum Erfassen des Prozessstarts erfasst wurde.

8. Vorrichtung zur Gewährleistung der Kontinuität des Betriebs nach Anspruch 6, wobei:
das Mittel zum Wiederherstellen des Systemzustands zusätzlich an die Vielzahl von Eingabe/Ausgabe-Ports und/oder -Vorrichtungen gekoppelt ist, um zusätzlich als Reaktion auf die Bestätigung von dem Mittel zum Bestimmen des Prozessstarts, dass die Verarbeitung von einem Systemzustand fortgesetzt werden kann, der in dem nichtflüchtigen Speichermittel gesichert ist, die Vielzahl von Eingabe/Ausgabe-Ports und/oder -Vorrichtungen wieder in den Systemzustand zu bringen, der in dem nichtflüchtigen Speichermittel gespeichert ist; und
das Mittel zur Verarbeitung nach der Wiederherstellung an das Mittel zum Wiederherstellen des Systemzustands gekoppelt ist, um des Weiteren zu bestimmen, wann die Vielzahl von Eingabe/Ausgabe-Ports und/oder -Vorrichtungen wieder in den Systemzustand gebracht sind, der zum Zeitpunkt des Befehls, mit einem Sicherungsprozess zu beginnen, vorherrschte, und zusätzlich an die Vielzahl von Eingabe/Ausgabe-Ports und/oder -Vorrichtungen gekoppelt ist, um den Betrieb des Prozesses zu steuern, sobald das Mittel zum Wiederherstellen des Systemzustands den Systemzustand wiederhergestellt hat, wobei das Mittel zur Verarbeitung nach der Wiederherstellung den Prozess in demselben, nächsten oder vorangehenden Prozessschritt wie dem Prozessschritt fortsetzt, der erfolgte, als der Befehl von dem Mittel zum Erfassen des Prozessstarts erfasst wurde.

9. Vorrichtung zur Gewährleistung der Kontinuität des Betriebs nach einem der vorangehenden Ansprüche, wobei das Mittel zum Erfassen des Starts eines Sicherungsprozesses des Weiteren einen Schalter (21) mit einem EIN-Zustand und einem AUS-Zustand und Verarbeitungsmittel (22) zum Erfassen einer Stromabschaltung enthält, um den Stromschaltzustand abzulesen, der von dem Schalter angezeigt wird, und ein Befehlssignal zu erzeugen, wenn der Stromschalter im AUS-Zustand ist.

10. Vorrichtung zur Gewährleistung der Kontinuität des Betriebs nach einem der vorangehenden Ansprüche, wobei die Stromversorgung eine Batterie mit einer Spannung enthält, und das Mittel zum Erfassen des Starts eines Sicherungsprozesses ein Verarbeitungsmittel zum Erfassen der Batteriespannung enthält, um die Spannung der Batterie zu erfassen und ein Befehlssignal zu erzeugen, wenn die Spannung unter einen vorbestimmten Wert fällt.

11. Vorrichtung zur Gewährleistung der Kontinuität des Betriebs nach einem der vorangehenden Ansprüche, wobei das Mittel zur Verarbeitung nach der Sicherung des Weiteren an die Stromversorgung gekoppelt ist, und die Stromversorgung abschaltet, sobald das Mittel zur Sicherung des Systemzustands den Systemzustand vollständig in dem nichtflüchtigen Speichermittel gespeichert hat.

12. Vorrichtung zur Gewährleistung der Kontinuität des Betriebs nach einem der vorangehenden Ansprüche, wobei das Mittel zur Verarbeitung nach der Sicherung des Weiteren ein Prozesswählmittel (111) enthält, das betriebsbereit an das Mittel zur Sicherung des Systemzustands gekoppelt ist, um einem Benutzer eine Vielzahl von Prozessen anzuzeigen, die ausgeführt werden können, nachdem der Systemzustand in dem nichtflüchtigen Speicher gespeichert wurde, und ein Prozessbestimmungsmittel, das die Wahl eines der Vielzahl von angezeigten Prozessen in Übereinstimmung mit einer vom Benutzer getätigten Eingabe ermöglicht, wobei zumindest einer der Prozesse mit dem gegenwärtigen Prozess fortsetzt.

13. Vorrichtung zur Gewährleistung der Kontinuität des Betriebs nach einem der vorangehenden Ansprüche, wobei das nichtflüchtige Speichermittel ein externes Speichermittel enthält.

14. Vorrichtung zur Gewährleistung der Kontinuität des Betriebs nach Anspruch 14, wobei das externe Speichermittel ein Festplattenlaufwerk enthält.

15. Verfahren zur Gewährleistung der Kontinuität des Betriebs in einem System, das einen Systemzustand anzeigt und ein Verfahren ausführt, wobei das System eine CPU mit einem Status, einen Hauptspeicher (84) zum Speichern von Daten, einen nichtflüchtigen Speicher (72), der mindestens eine Systemzustandsspeicherdatei (83) enthält, und eine Stromversorgung (101) zum Zuleiten von Strom zu dem System umfasst, wobei der CPU-Status und die Hauptspeicherdaten den Systemzustand darstellen, wobei das Verfahren folgende Schritte umfasst:
Erfassen eines Befehls, der durch eine Benutzereingabe zu Beginn eines Sicherungsprozesses initiiert wird, um den Systemzustand zu sichern und ein Befehlssignal bereitzustellen;
Speichern des Systemzustands in einer Systemzustandsspeicherdatei des nichtflüchtigen Speichers als Reaktion auf das Befehlssignal durch Speichern der Systemzustandsdaten, die notwendig sind, um den Systemzustand wiederherzustellen und den Prozess in demselben, nächsten oder vorangehenden Schritt fortzusetzen;
Durchführen einer Verarbeitung, nachdem der Systemzustand vollständig in dem nichtflüchtigen Speicher gespeichert wurde;
Erfassen, wenn die Stromversorgung eingeschaltet ist, und Bereitstellen eines Detektionssignals, und
Lesen des Systemzustands aus dem nichtflüchtigen Speicher und Wiederherstellen der CPU und des Speichers in dem Systemzustand, der zuletzt in dem nichtflüchtigen Speichermittel gespeichert wurde, um die Verarbeitung auf der Basis des Systemzustands fortzusetzen, der zum Zeitpunkt der Erfassung der Einschaltung der Stromversorgung gespeichert wurde.

16. Verfahren zur Gewährleistung der Kontinuität des Betriebs nach Anspruch 15, des Weiteren umfassend die folgenden Schritte:
Anzeigen für einen Benutzer einer Vielzahl von Prozessen, die ausgeführt werden können, nachdem der Systemzustand in dem nichtflüchtigen Speicher gespeichert wurde;
Ermöglichen einer Wahl eines aus der Vielzahl angezeigter Prozesse in Übereinstimmung mit einer vom Benutzer getätigten Eingabe, wobei mindestes einer der angezeigten Prozesse den Betrieb des Prozesses nach Wiederherstellung des Systemzustands fortsetzt; und
Lesen des ausgewählten Systemzustands aus dem nichtflüchtigen Speicher und Wiederherstellen der CPU und des Speichers in dem Systemzustand, der in dem nichtflüchtigen Speicher gespeichert ist, um die Verarbeitung auf der Basis des Systemzustands fortzusetzen, der zum Zeitpunkt der Erfassung der Einschaltung der Stromversorgung gespeichert wurde.

17. Verfahren zur Gewährleistung der Kontinuität des Betriebs nach Anspruch 15, des Weiteren umfassend die folgenden Schritte:
Anzeigen für einen Benutzer einer Vielzahl von gesicherten Systemzuständen als Reaktion auf das Detektionssignal, die aus dem nichtflüchtigen Speicher wiederhergestellt werden können;
Ermöglichen einer Wahl eines aus der Vielzahl angezeigter gesicherter Systemzustände in Übereinstimmung mit einer vom Benutzer getätigten Eingabe; und
Lesen eines aus der Vielzahl angezeigter gesicherter Systemzustände aus dem nichtflüchtigen Speicher in Übereinstimmung mit der Benutzerwahl, und Widerherstellen der CPU und des Speichers in den Systemzustand, der von dem Benutzer gewählt wurde und in dem nichtflüchtigen Speicher gespeichert ist.

18. Verfahren zur Gewährleistung der Kontinuität des Betriebs nach Anspruch 15, des Weiteren umfassend die folgenden Schritte:
Anzeigen für einen Benutzer einer Vielzahl von Prozessen, die ausgeführt werden können, nachdem der Systemzustand in dem nichtflüchtigen Speicher gespeichert wurde; und
Ermöglichen einer Wahl eines aus der Vielzahl angezeigter Prozesse in Übereinstimmung mit einer vom Benutzer getätigten Eingabe, wobei mindestens einer der angezeigten Prozesse mit dem gegenwärtigen Prozess fortgesetzt wird.

19. Verfahren zur Gewährleistung der Kontinuität des Betriebs nach einem der Ansprüche 15 bis 18, wobei das System des Weiteren eine Vielzahl von Eingabe/Ausgabe-Ports und/oder -Vorrichtungen mit einem Status enthält und der Status der Vielzahl von Eingabe/Ausgabe-Ports und/oder -Vorrichtungen auch den Systemzustand darstellt.

20. Verfahren zur Gewährleistung der Kontinuität des Betriebs nach einem der Ansprüche 15 bis 19, wobei wobei das nichtflüchtige Speichermittel ein externes Speichermittel enthält.

21. Verfahren zur Gewährleistung der Kontinuität des Betriebs nach Anspruch 20, wobei das externe Speichermittel ein Festplattenlaufwerk enthält.

## Revendications

1. Appareil pour fournir une continuité de fonctionnement dans un système présentant un état du système et effectuant un processus, le système comprenant une unité centrale ayant un statut, une mémoire principale (84) pour stocker des données, et un bloc d'alimentation (101) pour alimenter en énergie ledit système, ledit appareil pour fournir une continuité comprenant :
un moyen de détection du lancement du processus de sauvegarde (11) pour détecter une demande de lancement d'un processus de sauvegarde et pour produire un signal de requête en réponse à celle-ci, ledit moyen de détection du lancement du processus de sauvegarde comprenant un moyen de saisie des instructions utilisateur (51) pour fournir une saisie utilisateur, ladite saisie utilisateur indiquant une demande de lancement d'un processus de sauvegarde, et ledit moyen de détection du lancement du processus de sauvegarde produisant ledit signal de requête en réponse à ladite saisie utilisateur indiquant la demande du lancement d'un processus de sauvegarde, moyennant quoi ladite demande de lancement d'un processus de sauvegarde peut être initiée par un utilisateur;
un moyen de mémoire non volatile (72) comprenant au moins un fichier de mémorisation de l'état du système (83) pour enregistrer des données représentant un état dudit système;
un moyen de sauvegarde de l'état du système (12) couplé audit moyen de détection du lancement du processus de sauvegarde, pour recevoir ledit signal de requête, et couplé à ladite unité centrale et à ladite mémoire principale afin de recevoir un statut de l'unité centrale correspondant au statut de ladite unité centrale au moment de ladite requête et aux données dans ladite mémoire au moment de ladite requête, le statut de l'unité centrale ainsi que les données représentant un état dudit système lors de l'occurrence de ladite requête, et étant par ailleurs couplé audit moyen de mémoire non volatile pour enregistrer ledit état du système dans ledit fichier de mémorisation de l'état du système dudit moyen de mémoire non volatile en réponse audit signal de requête, en enregistrant les données sur l'état du système nécessaires pour restaurer ledit état du système afin de permettre audit appareil de réaliser ledit processus et pour poursuivre ledit processus avec la même étape, l'étape suivante, ou l'étape précédente ;
un moyen de traitement après sauvegarde (13) couplé audit moyen de sauvegarde de l'état du système afin de réaliser le traitement une fois que ledit moyen de sauvegarde de l'état du système a fait complètement sortir ledit état du système à l'attention dudit moyen de mémoire non volatile ;
un moyen de lancement du processus de restauration (14) couplé audit bloc d'alimentation afin de détecter quand ledit bloc d'alimentation est mis en marche et pour faire sortir un signal de détection en réponse à cela, et
un moyen de restauration de l'état du système (15) couplé audit moyen de lancement du processus de restauration afin de recevoir ledit siqnal de détection, couplés audit moyen de mémoire non volatile pour y lire ledit l'état du système, et couplés à ladite unité centrale et à ladite mémoire principale afin de rétablir, en réponse audit signal de détection, ladite unité centrale et ladite mémoire principale à l'état du système enregistré en dernier dans ledit moyen de mémoire non volatile, ledit processus pouvant être poursuivit avec une étape identique, suivante ou précédente du processus, en tant qu'étape du processus ayant lieu lorsque ladite requête a été détectée par ledit moyen de détection du lancement du processus de sauvegarde.

2. Appareil pour fournir une continuité de fonctionnement tel que revendiqué selon la revendication 1, le système comprenant par ailleurs une pluralité de ports d'entrée/sortie et/ou de dispositifs ayant un statut ; et ledit moyen de sauvegarde de l'état du système étant en plus couplé à ladite pluralité de ports d'entrée/sortie et/ou de dispositifs afin de par ailleurs recevoir un statut d'entrée/sortie correspondant au statut de ladite pluralité de ports d'entrée/sortie et/ou de dispositifs au moment de ladite demande, ledit statut d'entrée/sortie, en plus du statut de l'unité principale et des données, représentant un état dudit système lors d'une occurrence de ladite demande.

3. Appareil pour fournir une continuité de fonctionnement selon la revendication 1 ou selon la revendication 2, comprenant par ailleurs :
un moyen de sélection du processus (181) couplé de manière opérative audit moyen de lancement du processus de restauration afin d'afficher, à l'attention d'un utilisateur, une pluralité de processus pouvant être exécutés, au moins l'un desdits processus affichés assurant la continuité du fonctionnement dudit processus après la restauration de l'état du système.

4. Appareil pour fournir une continuité de fonctionnement tel que revendiqué selon la revendication 1 ou 2, comprenant par ailleurs :
un moyen de sélection du processus couplé de manière opérative audit moyen de lancement du processus de restauration afin de recevoir ledit signal de détection, ledit moyen de sélection du processus affichant, à l'attention d'un utilisateur, en réponse audit signal de détection, une pluralité d'états du système sauvegardés et enregistrés dans ledit moyen de mémoire non volatile, à partir desquels il est possible de restaurer ledit système ; et
un moyen de détermination du processus afin de permettre la sélection de l'un parmi ladite pluralité des états du système sauvegardés et affichés en fonction d'une saisie dudit utilisateur; et
où ledit moyen de restauration de l'état du système est couplé audit moyen de détermination du processus afin de recevoir ladite sélection, couplés audit moyen de mémoire non volatile pour y lire ledit état sélectionné parmi ladite pluralité d'états du système sauvegardés, et couplés à ladite unité centrale et à ladite mémoire principale afin de rétablir ladite unité centrale et ladite mémoire principale audit état du système sélectionné.

5. Appareil pour fournir une continuité de fonctionnement selon la revendication 1 ou la revendication 2, comprenant par ailleurs :
un moyen de sélection du processus couplé de manière opérative audit moyen de lancement du processus de restauration afin de recevoir ledit signal de détection, ledit moyen de sélection du processus affichant, à l'attention d'un utilisateur, en réponse audit signal de détection, l'un ou les plusieurs états du système sauvegardés pouvant être restaurés à partir dudit moyen de mémoire non volatile ; et
un moyen de détermination du processus pour permettre la sélection de l'un desdits états sauvegardés affichés en fonction de la saisie par un utilisateur ;
où ledit moyen de restauration de l'état du système est couplé audit moyen de détermination du processus afin de recevoir ladite sélection, et est couplé audit moyen de mémoire non volatile pour y lire l'un desdits états du système sauvegardés et correspondant à ladite sélection, et est couplé à ladite unité centrale et ladite mémoire principale afin de rétablir ladite unité centrale et ladite mémoire principale audit état du système sauvegardé sélectionné et enregistré dans ledit moyen de mémoire non volatile.

6. Appareil pour fournir une continuité de fonctionnement tel que revendiqué selon la revendication 1 ou la revendication 2, comprenant par ailleurs :
un moyen de détermination du lancement du processus couplé audit moyen de lancement du processus de restauration afin de recevoir ledit signal de détection, ledit moyen de détermination du lancement du processus confirmant, en réponse audit signal de détection, si le traitement peut être poursuivi, à partir d'un état du système sauvegardé dans ledit moyen de mémoire non volatile, et faisant sortir une confirmation indiquant si ledit traitement peut être poursuivi ;
où ledit moyen de restauration de l'état du système (15) est couplé audit moyen de détermination du lancement du processus, couplés audit moyen de mémoire non volatile pour y lire ledit état du système, et couplés à ladite unité centrale et à ladite mémoire principale afin de rétablir ladite unité centrale et ladite mémoire principale à l'état du système enregistré dans ledit moyen de mémoire non volatile en réponse à ladite confirmation provenant dudit moyen de détermination du lancement du processus indiquant que le traitement peut être poursuivi à partir d'un état du système sauvegardé dans ledit moyen de mémoire non volatile; et comprenant par ailleurs
un moyen de traitement après restauration (16) couplé audit moyen de restauration de l'état du système afin de déterminer quand l'unité centrale et la mémoire principale sont rétablis à l'état du système qui existait au moment de ladite demande de lancement d'un processus de sauvegarde, et
couplés à ladite unité centrale et mémoire principale afin de réguler le fonctionnement dudit processus après la restauration dudit état du système par le moyen de restauration de l'état du système, ledit moyen de traitement après restauration poursuivant ledit processus avec une même étape, une étape suivante ou précédente du processus, en tant qu'étape du processus ayant lieu lorsque ladite demande a été détectée par ledit moyen de détection du lancement du processus de sauvegarde.

7. Appareil pour fournir une continuité de fonctionnement tel que revendiqué par l'une quelconque des revendications 1 à 5, où
ledit moyen de restauration de l'état du système est en plus couplé à ladite pluralité de ports d'entrée/sortie et/ou de dispositifs pour la restauration additionnelle, en réponse audit signal de détection, de ladite pluralité de ports d'entrée/sortie et/ou de dispositifs, à l'état du système enregistré dans ledit moyen de mémoire non volatile, moyennant quoi ledit processus peut être poursuivi avec une même étape, une étape suivante ou précédente du processus, en tant qu'étape du processus ayant lieu lorsque ladite demande a été détectée par ledit moyen de détection du lancement du processus de sauvegarde.

8. Appareil pour fournir une continuité de fonctionnement selon la revendication 6, où
ledit moyen de restauration de l'état du système est en plus couplé à ladite pluralité de ports d'entrée/sortie et/ou de dispositifs afin de rétablir de manière additionnelle ladite pluralité de ports d'entrée/sortie et/ou de dispositifs à l'état du système enregistré dans ledit moyen de mémoire non volatile, en réponse à ladite confirmation provenant dudit moyen de détermination du lancement du processus indiquant que le traitement peut être poursuivi à partir d'un état du système sauvegardé dans ledit moyen de mémoire non volatile ; et
ledit moyen de traitement après restauration étant couplé audit moyen de restauration de l'état du système afin de par ailleurs déterminer quand ladite pluralité de ports d'entrée/sortie et/ou de dispositifs sont restaurés à l'état du système qui existait au moment de ladite demande de lancement d'un processus de sauvegarde, et étant couplé de manière additionnelle à ladite pluralité de ports d'entrée/sortie et/ou de dispositifs afin de réguler le fonctionnement dudit processus après la restauration dudit état du système par le moyen de restauration de l'état du système, ledit moyen de traitement après restauration poursuivant ledit processus avec une même étape, une étape suivante ou précédente du processus, en tant qu'étape du processus ayant lieu lorsque ladite demande a été détectée par ledit moyen de détection du lancement du processus de sauvegarde.

9. Appareil pour fournir une continuité de fonctionnement selon l'une quelconque des revendications précédentes, où ledit moyen de détection du lancement du processus de sauvegarde comprend par ailleurs un interrupteur (21) ayant un état allumé et un état éteint, et un moyen de traitement de détection de la mise hors tension (22) afin de lire l'état de l'interrupteur d'alimentation indiqué par ledit interrupteur et pour produire un signal de requête lorsque ledit interrupteur d'alimentation se trouve à l'état éteint.

10. Appareil pour fournir une continuité de fonctionnement selon l'une quelconque des revendications précédente, ledit bloc d'alimentation comprenant une batterie ayant une tension, et ledit moyen de détection du lancement du processus de sauvegarde comprenant un moyen de traitement de détection de la tension de la batterie afin de détecter la tension de la batterie et produire un signal de requête lorsque ladite tension chute en deçà d'une valeur prédéfinie.

11. Appareil pour fournir une continuité de fonctionnement selon l'une quelconque des revendications précédentes, ledit moyen de traitement après sauvegarde étant par ailleurs couplé audit bloc d'alimentation et coupant ledit bloc d'alimentation lorsque ledit moyen de sauvegarde de l'état du système a complètement enregistré ledit état du système dans ledit moyen de mémoire non volatile.

12. Appareil pour fournir une continuité de fonctionnement selon l'une quelconque des revendications précédentes, ledit moyen de traitement après sauvegarde comprenant par ailleurs un moyen de sélection du processus (111) couplé de manière opérative audit moyen de sauvegarde de l'état du système afin d'afficher pour un utilisateur une pluralité de processus pouvant être exécutés après l'enregistrement dudit état du système dans ledit moyen de mémoire non volatile, et un moyen de détermination du processus afin de permettre la sélection de l'un parmi ladite pluralité de processus en fonction d'une saisie par ledit utilisateur, au moins l'un desdits processus se poursuivant avec le processus en cours.

13. Appareil pour fournir une continuité de fonctionnement selon l'une quelconque des revendications précédentes, ledit moyen de mémoire non volatile comprenant un moyen de stockage externe.

14. Appareil pour fournir une continuité de fonctionnement selon la revendication 14, ledit moyen de stockage externe comprenant un disque dur.

15. Méthode pour fournir une continuité de fonctionnement pour un système présentant un état du système et réalisant un processus, le système comprenant une unité centrale ayant un statut, une mémoire principale (84) pour enregistrer des données, une mémoire non volatile (72) comprenant au moins un fichier de mémorisation de l'état du système pour l'enregistrement de données représentant un état dudit système, et un bloc d'alimentation (101) pour alimenter en énergie ledit système, ledit état de l'unité centrale et lesdites données de la mémoire principale représentant ledit état du système, ladite méthode comprenant les étapes suivantes:
détection d'une demande initiée par un utilisateur et saisie afin de lancer un processus de sauvegarde, pour sauvegarder ledit état du système et fournir un signal de requête ;
enregistrement dudit état du système dans ledit fichier de mémorisation de l'état du système de ladite mémoire non volatile en réponse audit signal de requête, en enregistrant les données sur l'état du système nécessaires pour la restauration dudit état du système, et pour poursuivre ledit processus avec une même étape ou une étape suivante ou précédente ;
réalisation d'un traitement après l'enregistrement complet dudit état du système dans ladite mémoire non volatile;
détection de quand ledit bloc d'alimentation est mis en marche et fourniture d'un signal de requête ; et
lecture dudit état du système à partir de ladite mémoire non volatile et rétablissement de ladite unité centrale et de ladite mémoire à l'état du système enregistré en dernier dans ladite mémoire non volatile pour la poursuite du traitement sur la base dudit état du système enregistré au moment de la détection de l'instant où le bloc d'alimentation a été mis en marche.

16. Méthode pour fournir une continuité de fonctionnement selon la revendication 15, comprenant par ailleurs les étapes suivantes :
affichage à l'attention d'un utilisateur d'une pluralité de processus pouvant être exécutés après l'enregistrement dudit état du système dans ladite mémoire non volatile ;
autorisation de la sélection de l'un parmi la pluralité de processus affichés en fonction d'une saisie faite par l'utilisateur, au moins l'un desdits processus affichés poursuivant le fonctionnement dudit processus après la restauration dudit état du système; et
lecture dudit état du système sélectionné à partir de ladite mémoire non volatile et rétablissement de ladite unité centrale et de ladite mémoire à l'état du système enregistré dans ladite mémoire non volatile pour la poursuite du traitement sur la base dudit état du système enregistré au moment de la détection de l'instant où le bloc d'alimentation a été mis en marche.

17. Méthode pour fournir une continuité de fonctionnement selon la revendication 15, comprenant par ailleurs les étapes suivantes :
affichage à l'attention d'un utilisateur d'une pluralité d'états du système sauvegardés en réponse audit signal de détection et pouvant être restaurés à partir de ladite mémoire non volatile ;
autorisation de la sélection de l'un parmi ladite pluralité d'états du système sauvegardés affichés en fonction d'une saisie faite par l'utilisateur ; et
lecture de l'un parmi la pluralité des états du système sauvegardés affichés à partir de ladite mémoire non volatile en fonction de ladite sélection faite par l'utilisateur, et rétablissement de ladite unité centrale et de ladite mémoire à l'état du système sélectionné par ledit utilisateur et enregistré dans ladite mémoire non volatile.

18. Méthode pour fournir une continuité de fonctionnement selon la revendication 15, comprenant par ailleurs :
l'affichage à l'attention de l'utilisateur d'une pluralité de processus pouvant être exécutés après l'enregistrement dudit état du système dans ladite mémoire non volatile ; et
autorisation de la sélection de l'un parmi la pluralité des processus affichés en fonction d'une saisie faite par l'utilisateur, au moins l'un parmi lesdits processus affichés se poursuivant avec le processus en cours.

19. Méthode pour fournir une continuité de fonctionnement selon l'une quelconque des revendications 15 à 18, le système comprenant par ailleurs une pluralité de ports d'entrée/sortie et/ou de dispositifs ayant un statut, et ledit statut de ladite pluralité de ports d'entrée/sortie et/ou de dispositifs, représentant également un état du système.

20. Méthode pour fournir une continuité de fonctionnement selon l'une quelconque des revendications 15 à 19, ladite mémoire non volatile comprenant un moyen de stockage externe.

21. Méthode pour fournir une continuité de fonctionnement selon la revendication 20, ledit moyen de stockage externe comprenant un disque dur.
